## Europäisches Patentamt
## European Patent Office
## Office européen des brevets

(19)

(11) Veröffentlichungsnummer: **0 237 716**
**B1**

(12)

# EUROPÄISCHE PATENTSCHRIFT

(45) Veröffentlichungstag der Patentschrifft:
**17.01.90**

(51) Int. Cl. ⁴: **F 16 B 39/30**

(21) Anmeldenummer: **87100589.8**

(22) Anmeldetag: **17.01.87**

(54) Verbindungselement nach Art einer Schrauben/Muttern-Verbindung.

(30) Priorität: **18.01.86 DE 3601389**

(43) Veröffentlichungstag der Anmeldung:
**23.09.87 Patentblatt 87/39**

(45) Bekanntmachung des Hinweises auf die Patenterteilung:
**17.01.90 Patentblatt 90/03**

(84) Bennante Vertragsstaaten:
**AT ES FR GB IT NL SE**

(56) Entgegenhaltungen:
**EP-A-0 063 677**
**EP-A-0 065 344**
**DE-A-2 625 997**
**DE-B-2 365 132**
**DE-U-7 328 919**

(73) Patentinhaber: **Kamax-Werke Rudolf Kellermann GmbH & Co. KG**
**Petershütter Allee 29**
**D-3360 Osterode am Harz (DE)**

(72) Erfinder: **Oertel,Klaus**
**Admiral Zenker Strasse 10**
**3360 Osterode (DE)**

(74) Vertreter: **Patentanwälte Dipl.-Ing. Rudolf Bibrach Dipl.-Ing. Elmar Rehberg**
**Pütterweg 6 Postfach 738**
**D-3400 Göttingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verbindungselement nach Art einer Schrauben/Muttern-Verbindung mit den im Oberbegriff des Anspruchs 1 angegebenen Merkmalen. Die Erfindung kann an Schrauben verwirklicht werden, die hergestellt werden und beispielsweise Muttern genormter Steigung zugeordnet sind. Eine solche Mutter kann in Form einer Gewindebohrung in einem festen Teil, beispielsweise dem Motorblock eines Kraftfahrzeugs, bestehen. Andererseits ist es natürlich auch möglich, die Erfindung an einer Mutter zu verwirklichen, die einer Schraube mit genormter Steigung zugeordnet ist. Schließlich kann die Erfindung sowohl an einer Schraube wie auch an einer Mutter verwirklicht werden, wenn beide Teile in Zuordnung zueinander hergestellt werden und z. B. jeweils von der Normsteigung abweichende Steigung aufweisen.

Beim Versagen eines Verbindungselements nach Art einer Schrauben/Muttern-Verbindung unterscheidet man bekanntlich die Ausfallursache des Lockerns einerseits und die Ausfallursache des Losdrehens andererseits. Das Lockern einer Schrauben/Muttern-Verbindung wird dann eintreten, wenn bei axialer Beanspruchung die Klemmkraft vermindert wird oder ganz verlorengeht, sei es durch ungenügende Montagevorspannkraft, zu hohe Setzbeträge, übermäßige Entlastung der geklemmten Teile usw. Beim Losdrehen einer Schrauben/Muttern-Verbindung wirken hingegen meist wechselnde, rüttelnde oder vibrierende Querkräfte senkrecht zur Schraubenachse ein. Damit wird kurzzeitig die Reibung im Gewinde und/oder die Reibung unter dem Kopf oder der Mutter und somit die Selbsthemmung des Verbindungselements vermindert oder gänzlich aufgehoben. Die Erfindung ist auf eine Sicherungseinrichtung gegen selbsttätiges Losdrehen gerichtet.

Aus dem DE-U-7 328 919 ist eine selbstklemmende Sicherungsmutter bekannt, bei der die Gewindesteigung geringfügig unterschiedlich von der Gewindesteigung des zugehörigen Gewindebolzens gewählt ist. Diese Steigungsdifferenz wird je Gewindegang mit 0,01 bis 0,1 mm, vorzugsweise mit 0,05 bis 0,08 mm angegeben. Eine solche technische Lehre ist insoweit unvollständig, als die Bezugsgröße, nämlich die Angabe der Steigung selbst, fehlt. Wird dieser angegebenen Steigungsdifferenz zwischen Schraube und Mutter die übliche Steigung von Gewinden im Normbereich zugeordnet, dann ist zwar ein weiter Bereich aufgespannt, der vorzugsweise angegebene Bereich liegt jedoch deutlich im Bereich plastischer Verformung zumindest eines Teils des Verbindungselements. Vorzugsweise wird die zur Klemmung nötige Verformung im wesentlichen im Bereich der Mutter stattfinden, so daß das Gewinde der Schraube nicht beschädigt wird. Der Klemmeffekt kann einerseits durch den Unterschied in der Steigung und andererseits auch durch die Höhe der Mutter entsprechend den jeweiligen Erfordernissen gewählt werden. Berücksichtigt man weiterhin, daß sowohl die Muttern einerseits wie auch die Schrauben andererseits mit entsprechenden Toleranzbändern hergestellt werden und ein solches Verbindungselement willkürlich zusammengestellt wird, dann ergibt sich, daß infolge der Herstellungstoleranz entstehende Paarungen zwischen Muttern und Schrauben vielfach überhaupt keine Klemmung aufweisen oder aber vielfach in den Bereich plastischer Verformungen führen, so daß eine Wiederverwendbarkeit ausgeschlossen ist.

Andererseits sind Verbindungselemente bekannt, bei denen eine Sicherungseinrichtung auf andere Weise wirksam wird. Das dem Losdrehmoment entgegenwirkende Reibmoment wird dadurch bereitgestellt, daß ein mikroverkapselter Kleber auf das Schraubengewinde oder das Muttergewinde aufgetragen wird. Werden die Schraube und die Mutter ineinandergeschraubt, so wird der Kleber aktiviert und es erfolgt verkapselte Kleber kann unterschiedlichen Anforderungen angepaßt werden und hält auch mechanischen Beanspruchungen und Temperaturen bis ca. 110°C Stand. Es versteht sich, daß die volle Wirkung der Sicherungseinrichtung nur beim erstmaligen Gebrauch des Verbindungselements eintritt, so daß diese Sicherungseinrichtung z. B. für eine Stellschraube, die entsprechend oft verstellt werden muß, nicht geeignet ist.

Es ist auch bereits bekannt, einen elastischen, verformbaren Kunststoff auf das Schraubengewinde oder das Muttergewinde einzubringen, der zur Erhöhung des Gewindereibmoments beiträgt. Eine solche Sicherungseinrichtung wird bereits beim einmaligen Gebrauch bleibend verformt, so daß bei nachfolgenden Betätigungen und Anwendungen die volle Sicherheit nicht mehr erwartet werden kann.

Sicherungseinrichtungen der hier angesprochenen Art lassen sich auch dadurch realisieren, daß z. B. die Kopfauflagefläche einer Kopfschraube zur Erhöhung des Kopfreibungsmoments mit einer Verzahnung ausgebildet ist, die durch Verriegelung in die entsprechende Auflagefläche des Werkstücks eingreift. Hierzu ist jedoch Voraussetzung, daß sich die Verzahnung in das Material des Werkstücks eingraben kann; dieses darf somit nicht härter als das Material der Schraube sein.

Alle diese bekannten Sicherungseinrichtungen unterliegen gewissen Einschränkungen in Bezug auf ihre Wiederverwendbarkeit, Öl-, Lösungsmittel- und Temperaturbeständigkeit, Werkstoff und Härte des Gegenstücks und Konstanz in der Wirkung. Nachteilig ist in allen Fällen, daß eine zusätzliche Bearbeitung bzw. Anbringung der Sicherungseinrichtung erforderlich ist.

Andererseits ist es bei Verbindungselementen nach Art mäßigeren Lastaufnahme durch die tragenden Gewindegänge bekannt (Zeitschrift Konstruktion, 1952, Heft 12, Seiten 377 – 379, Kaehler "Mittel zur gleichmäßigeren Lastaufnahme durch die tragenden Gewindegänge der Schraubenkupplung"), das Schraubengewinde und das zugehörige Muttergewinde mit verschieden großer Steigung herzustellen. Eine gleichhohe Belastung der einzelnen gekuppelten Gewindegänge läßt sich erreichen, wenn man die Steigung im Schrauben- und Muttergewinde derart verschieden wählt, daß sie unter Belastung je Gang im Schrauben- und Muttergewinde gleich groß wird. Bei angenäherter Erfüllung dieser Idealbedingung wird sich mindestens eine verringerte Belastung des ersten tragenden Gewindegangs ergeben. Die Abweichung der Steigung des Schraubengewindes gegenüber der Steigung des Muttergewindes ist sehr klein. Eine Randbedingung bei dieser Kraftaufteilung ist stets, daß die Steigungsdifferenz nicht größer sein darf als das Flankenspiel zwischen Schrauben- und Muttergewinde dividiert durch die Anzahl der ihm Eingriff befindlichen Gewindegänge. Auf diese Weise wird sichergestellt, daß die Schraube leichtgängig und ohne Klemmung montiert werden kann.

Auch zur Erhöung der Dauerhaltbarkeit von Verbindungselementen nach Art einer Schrauben/Muttern-Verbindung werden geringe Steigungsdifferenzen zwischen Schraubengewinde und Muttergewinde eingesetzt (Klein "Hochwertige Schraubenverbindungen, einige Gestaltungsprinzipien und Neuentwicklungen", Zeitschrift Konstruktion, 1959, Seiten 201 bis 212 und Seiten 259 bis 264). Die bessere Kraftaufteilung und die Erhöhung der Dauerhaltbarkeit fußen auf dem bekannten Nachteil, daß eine normal ausgebildete Schrauben/Muttern-Verbindung, also mit übereinstimmender Gewindesteigung, im wesentlichen im Bereich des ersten sowie einiger weniger nachfolgender Gewindegänge zur Kraftübertragung herangezogen wird, während die übrigen Gewindegänge für die Kraftübertragung nichts beitragen. Dem wirkt die Maßnahme entgegen, die Steigung des Schraubengewindes um ca. 1 ‰ kleiner auszuführen als die Steigung des Muttergewindes und es ergibt sich eine gleichmäßigere Kraftübertragung in den einzelnen Gewindegängen entlang der Einschraubtiefe. Hieraus folgt wiederum eine effektive Verbesserung der Dauerhaltbarkeit. Allerdings ist es mit praktischen Schwierigkeiten verbunden, derart kleine Steigungsdifferenzen mit der erforderlichen Genauigkeit herzustellen. Bei größeren Steigungsdifferenzen verschlechtert sich die Dauerhaltbarkeit.

Der Erfindung liegt die Aufgabe zugrunde, ein Verbindungselement nach Art einer Schrauben/Muttern-Verbindung der eingangs beschriebenen Art zu schaffen, welches also eine Sicherungseinrichtung gegen selbsttätiges Losdrehen aufweist und bei dem eine Wiederverwendbarkeit gewährleistet ist.

Erfindungsgemäß wird dies dadurch erreicht, daß der Unterschied der Steigung ΔP des Schraubengewindes relativ zum Muttergewinde etwa zwischen 1 und 2 % liegt, und daß dieser Unterschied ΔP und die Mutternhöhe bzw. Einschraubtiefe aufeinander auf eine Klemmung im elastischen Bereich abgestimmt sind, wobei sich die Mutternhöhe bzw. Einschraubtiefe aus der mit der Steigung P multiplizierten Summe von reibfreien Umdrehungen n und zusätzlichen Umdrehungen x bis zur ggf. maximalen elastischen Verformbarkeit nach den Formeln

$$n = \frac{s}{\Delta P}$$

$$x = \frac{s \cdot F \cdot P}{A \cdot E \cdot \Delta P^2}$$

zusammensetzt, wobei s das axiale Flankenspiel, F die maximale Spannkraft, A der Spannungsquerschnitt und E den Elastizitätsmodul bedeuten.

Mit der Erfindung wird der Bereich plastischer Verformung vermieden und der Bereich der elastischen Verformung ganz oder teilweise ausgenutzt. Die Ausbildung ist so getroffen, daß sich zunächst Schraube und Mutter in einigen Gewindegängen leichtgängig und ohne Klemmung montieren lassen, ohne daß dabei die Mutternhöhe oder die maximale Einschraubtiefe überschritten wird. Zu einem gewissen Zeitpunkt ist jedoch das Flankenspiel zwischen Schrauben- und Muttergewinde aufgezehrt und überwunden, wobei dann das Reibmoment der Sicherungseinrichtung durch die bei elastischer Verformung auftretenden Kräfte entsteht. Der Beginn einer Klemmwirkung ist dabei deutlich spürbar. Auch hierbei ist in der Regel die maximale Einschraubtiefe noch nicht erreicht, sondern sie liegt jenseits dieser Kraftschwelle. Das Klemmen wird also ganz bewußt zur Realisierung der Sicherungseinrichtung herangezogen. Nach diesem fortschreitenden Verschraubungsvorgang nach Überschreiten der Kraftschwelle tritt eine elastische Verformung an Schraube und/oder Mutter auf, d. h. die Gewindegänge liegen an zwei Bereichen bzw. zwei Stellen der maximalen Einschraubtiefe auf unterschiedlichen Seiten aneinander an. Das Flankenspiel wird nach seiner Aufzehrung also überwunden, wobei der Bereich dieser Überwindung ausschließlich im elastischen Bereich der Verbindungselemente stattfindet. Eine bleibende Verformung von Teilen des Verbindungselements wird vermieden, so daß das Verbindungselement auch mehrfach verwendbar ist und bleibt. Auch bei dieser mehrfachen Verwendung wird die Sicherungswirkung jeweils verläßlich erreicht, wobei es nicht unbedingt erforderlich ist – je nach Anwendungsfall – den Bereich der elastischen Verformbarkeit nun unbedingt ganz bzw. vollständig auszunutzen.

Das neue Verbindungselement weist eine Reihe von Vorteilen auf:

Das durch die Klemmung in dem Gewindegang erzeugte Reibmoment ist, da es sich ausschließlich im elastischen Bereich abspielt, nahezu beliebig oft reproduzierbar. Die Sicherungswirkung ist damit auch bei mehrfachem Gebrauch der Schraube in Verbindung mit der Mutter gegeben. Weiterhin ist es vorteilhaft, daß die Sicherungswirkung sofort bei bzw. nach der Montage wirksam ist. Es vergeht also keine Wartezeit, wie sie beispielsweise bei Verwendung eines mikroverkapselten Klebers erforderlich ist. Weiterhin tritt keine Schwächung des Gewindes durch irgendwelche Nuten oder Sonderprofile, z. B. Feingewinde, ein, da als Gewindeausbildung der Gewindeflanke die übliche Normausbildung einsetzbar ist. Die neue Sicherungseinrichtung ist auch beständig gegen Alterung. Eine Beschädigung bzw. Zerstörung der Kopfauflagefläche tritt nicht ein. Besonders vorteilhaft ist, daß durch die erfindungsgemäße Ausbildung auch keine Einschränkung der Festigkeit bzw. der Ausnutzbarkeit der Schrauben/Muttern-Verbindung eintritt. Schließlich ist die Anwendung dieser Sicherungseinrichtung völlig unabhängig von der Härte und/oder Oberflächenbeschaffenheit des Werkstücks bzw. des Gegenmaterials. Bei bestimmten Anwendungsfällen treten schließlich noch die Vorteile auf, daß durch die Steigungsdifferenz gleichzeitig auch die Tragfähigkeit der einzelnen Gewindegänge durch die gesteuerte Spannungsverteilung im Gewinde verbessert werden kann. Überraschend ist, daß bei bestimmten Belastungsfällen – relativ zu der entsprechenden Ausbildung des Verbindungselements – keine Verminderung der Nutzung der Verbindung durch zusätzliche Gewindereibung im verspannten Zustand auftritt. Diese beiden Vorteile treten dann auf, wenn die Steigung des Schraubengewindes kleiner als die Steigung des Muttergewindes ist.

Der Größenunterschied der Steigung des Schraubengewindes relativ zum Muttergewinde liegt etwa zwischen 1 und 2 %.

Wichtig ist jedoch nicht allein diese Größenordnung, sondern die zusätzliche Abstimmung auf die Einschraubtiefe. Die Einschraubtiefe muß mindestens so groß, jedoch vorzugsweise größer sein als die Einschraubtiefe, die anfangs bis zum Erreichen der Klemmung und somit bis zum Aufzehren des Flankespiels abläuft. Diese Anzahl der reibfreien Umdrehungen ist dann unverhältnismäßig groß bzw. zu groß, wenn die Steigungsdifferenz zu klein wird, also etwa unterhalb 1 % liegt. Andererseits ist die Anzahl der reibfreien Umdrehungen dann verhältnismäßig klein, wenn die Steigungsdifferenz relativ groß wird, beispielsweise im Bereich über 2 %. Ähnlich verhält es sich mit der Anzahl der zusätzlichen Umdrehungen bis zur maximalen elastischen Verformung, also mit der Anzahl der Umdrehungen, bei denen die Klemmung vorhanden ist. Nutzbar für den Effekt bleibt also nur der Zwischenbereich. Die gemachten Angaben beziehen sich auf normal angewendete Steigungen, nicht dagegen auf Feingewinde.

Der Unterschied der Steigung $\Delta P$ und die Mutternhöhe bzw. Einschraubtiefe können so aufeinander abgestimmt sein, daß bei Auftreten der Vorspannkräfte durch elastische Verformung im Einschraubbereich die Steigungsdifferenz und damit das Reibmoment teilweise oder ganz abgebaut wird. Auf die elastische Ausbildung kann man durch die Gestaltung des Verbindungselements, durch Werkstoffauswahl und Wärmebehandlung Einfluß nehmen. Der beschriebene Effekt ist besonders erstaunlich, gestattet aber andererseits auch die vorteilhafte Ausnutzung des Verbindungselements. Zu Beginn des Aufbringens einer Vorspannkraft, also mit Beginn des Aufsetzens der Schraube bzw. Mutter auf dem Werkstück wird das an sich wachsende Anzugsmoment geringfügig kleiner, weil das Reibmoment nachläßt bzw. verschwindet, bewirkt durch eine elastische Längung der Spannenden und eine elastische Kürzung der verspannten Teile. Das Reibmoment erscheint aber sofort bei Nachlassen der Belastung wieder und ist damit als Sicherungseinrichtung voll wirksam.

Ein Schrauben/Muttern-Verbindungselement kann einmal auf Zug und zum anderen auf Druck beansprucht werden. Andererseits kann einmal das Schraubengewinde kleiner als das Muttergewinde ausgebildet werden und umgekehrt. Je nach den verschiedenen Kombinationen dieser Belastungsfälle und der zugehörigen Ausbildung ergeben sich verschiedene Wirkungen und Vorteile. Diese Besonderheiten müssen entsprechend bei der Auslegung des Verbindungselements berücksichtigt werden. Für die Ausnutzung der Belastbarkeit einer Schrauben/Muttern-Verbindung als Befestigungsschraube ist es sinnvoll, wenn das die Sicherungseinrichtung kennzeichende Reibmoment im belasteten Zustand verschwindet. Soll dagegen eine Stellschraube realisiert werden, ist es vorteilhaft, wenn das Reibmoment im belasteten Zustand erhalten bleibt, so daß sich das Verbindungselement weder bei Belastung noch im entlasteten Zustand selbsttätig losdrehen kann.

In weitere Unteransprüchen sind vorteilhafte Ausgestaltungsmöglichkeiten aufgezeigt.

Die Erfindung wird anhand verschiedener Ausführungsformen des Verbindungselements weiter verdeutlicht und beschrieben. Es zeigen:

Figur 1   den typischen Anwendungsfall einer Befestigungsschraube,

Figur 2   die schematische Darstellung einer Ausführungsform des Verbindungselements für den Anwendungsfall nach Figur 1, bei der die Steigung des Schraubengewindes kleiner als die Steigung des Muttergewindes ist, in unbelastetem Zustand,

Figur 3   die Ausführungsform gemäß Figur 2 unter Zugbelastung,

Figur 4   den typischen Anwendungsfall einer Stellschraube,

Figur 5   ein theoretisches Diagramm der Momente und Kräfte über dem Drehwinkel,

Figur 6   eine Darstellung zur Verdeutlichung des Flankenspiels,

Figur 7   die Grenzkurven des axialen Flankenspiels über der Mutternlänge,

Figur 8   die Darstellung des Streubereichs,

Figur 9   ein Diagramm der reibfreien Umdrehungen sowie der zusätzlichen Umdrehungen über der Steigungsdifferenz und

Figur 10   ein Versuchsdiagramm der Momente und Kräfte über dem Verdrehwinkel.

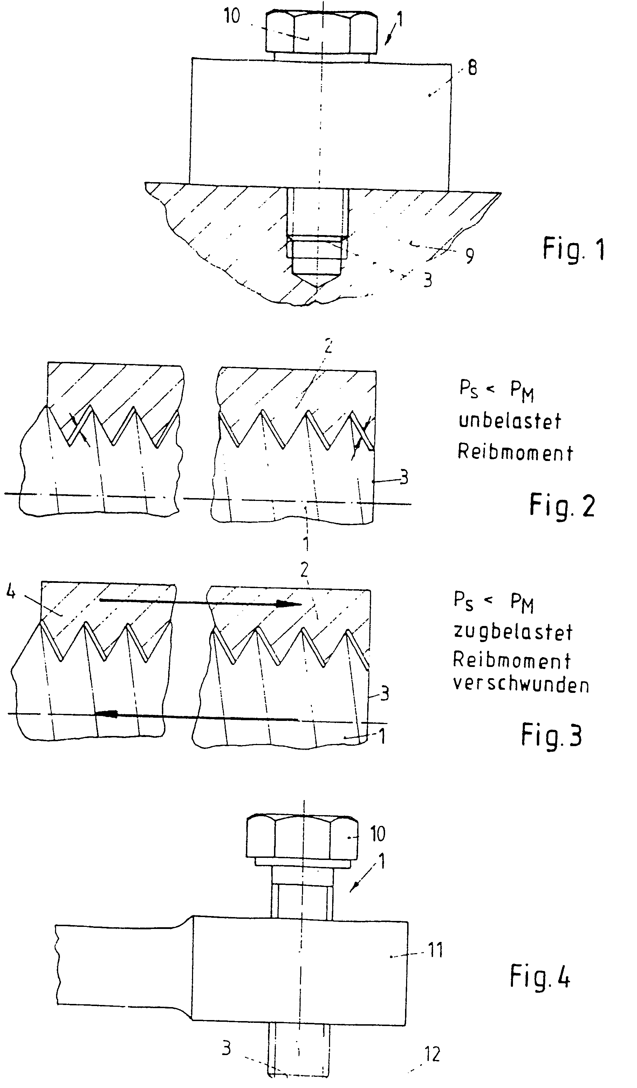

Figur 1 zeigt den für die Erfindung typischen Anwendungsfall einer Befestigungsschraube. Eine Schraube 1 durchsetzt einen zu verspannenden Teil 8 und greift mit ihrem Gewindeschaft in einen spannenden Teil 9 ein, der ein Muttergewinde ähnlich wie eine Mutter aufweist. Dabei wird der zu verspannende Teil 8 zwischen dem Kopf 10 der Schraube 1 und der Oberfläche des spannenden Teils 9 eingeklemmt bzw. mit der entsprechenden Vorspannkraft belastet. Insoweit entspricht dies dem üblichen Stand der Technik von Befestigungsschrauben.

In Figur 2 ist in schematisierender Weise nur die Schraube 1 und eine zugehörige Mutter 2 angedeutet, wie sie gemäß der erfindungsgemäßen Ausbildung beispielsweise für den Anwendungsfall einer Befestigungsschraube gemäß Figur 1 eingesetzt werden können. Von der Schraube 1 ist nur das mit Gewinde versehene vordere Teil dargestellt, so daß das freie Ende 3 der Schraube 1 wie ersichtlich vollständig in die Mutter 2 eingeschraubt ist. Die Mutternhöhe entspricht somit der Einschraubtiefe. Bei diesem Ausführungsbeispiel ist die Ausbildung so getroffen, daß die Steigung $P_s$ des Schraubengewindes kleiner als die Steigung $P_M$ des Muttergewindes ausgebildet ist. Auf der Schraube 1 liegen also die Gewindegänge näher beieinander, während sie auf der Mutter 2 vergleichsweise etwas weiter auseinandergerückt sind. Figur 2 zeigt den unbelasteten verschraubten Zustand.

Man erkennt, daß in den beiden Endbereichen der Mutter 2 jeweils eine Anlage der Gewindegänge der Mutter an den Gewindegängen der Schraube erfolgt, während im Mittelbereich diese Flächen nicht aneinanderliegen. Infolge der Auflagen der Flächen der Gewindegänge aneinander in den beiden Endbereichen der Mutter ist ein Reibmoment vorhanden, welches die Sicherheitseinrichtung gegen Losdrehen symbolisiert bzw. darstellt.

In Figur 3 ist das Verbindungselement aus Schraube 1 und Mutter 2 gemäß Figur 2 dargestellt, wenn es unter Zugbelastung gerät. Infolge der Plastizitäten der spannenden und verspannten Teile verschwindet die Anlage der Gewindeflanken in dem Kopf der Schraube 1 zugekehrten Bereich 4 der Mutter 2. In diesem Bereich 4 legen sich die Flanken des Gewindes infolge der elastischen Nachgiebigkeiten genauso an, wie im Bereich des freien Endes 3 der Schraube. Es sei darauf hingewiesen, daß die Verteilung der Anlage hier nur schematisch wiedergegeben ist. Über die Einschraubtiefe kann auch hier eine tendenzmäßige Ausbildung in der einen oder anderen Richtung gegeben sein. Die Darstellung ist so vorgenommen, als ob das zu der Sicherungseinrichtung gehörende Reibmoment vollständig verschwunden ist. Dafür ist das Reibmoment, welches zum Aufbringen der erforderlichen Vorspannkraft erforderlich ist, entsprechend angestiegen.

Figur 4 zeigt den typischen Anwendungsfall einer Stellschraube. Bei gleicher Ausführung der Steigungsdifferenz ($P_S$ < $P_M$) gilt unbelastet Figur 2 analog. Bei Belastung, d. h. Druckbeanspruchung in dem Gewindeende der Schraube zwischen Stellglied 11 und Gegenlager 12 ergibt sich in Abhängigkeit von den Steifigkeiten von Schraube 1 und Stellglied 11 eine Flankenanlage nach Figur 2 ($E_M$ < $E_S$) oder Figur 3 ($E_M$ > $E_S$).

Für beide Anwendungsfälle ist auch eine Umkehr der Ausbildung der Steigungsdifferenzen denkbar ($P_S$ > $P_M$), jedoch dürfte dies nur in Sonderfällen zweckmäßig sein.

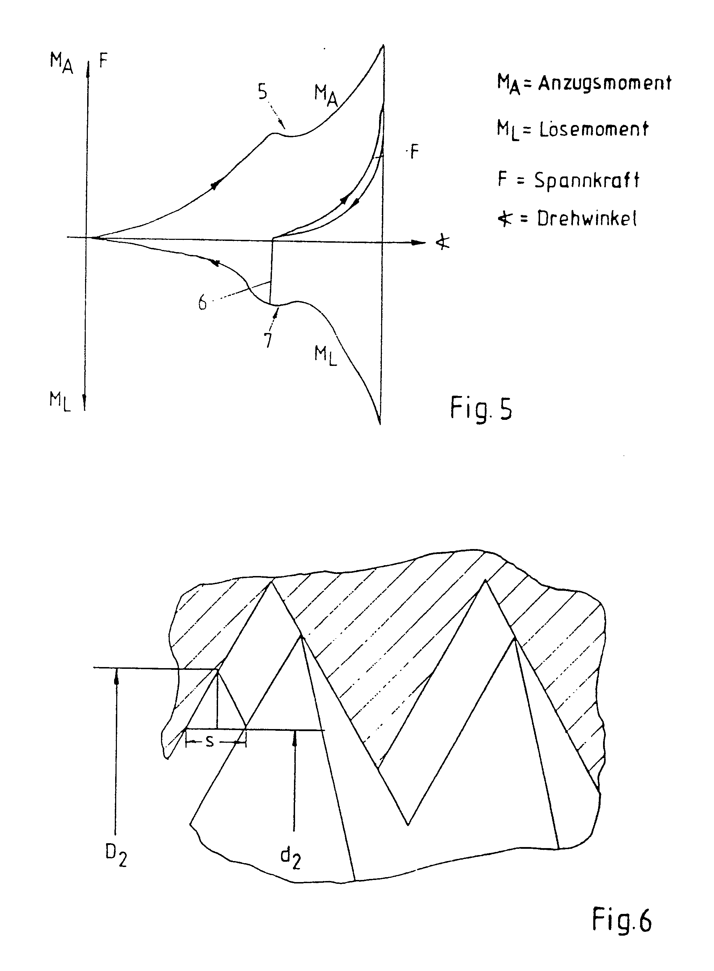

Es versteht sich, daß die Darstellungen nur das prinzipielle Verhalten verdeutlichen. Je nach Einschraubtiefe kommt es natürlich vor, daß nicht nur der erste und der letzte Gewindegang anliegen, sondern auch eine mehr oder weniger große Anzahl von Gewindegängen, die sich von dem ersten und letzten Gewindegang der Mutter ausgehend symmetrisch nach innen auf die halbe Länge der Mutter hin erstrecken. Die Verformung der Gewindegänge zueinander geschieht dabei ausschließlich im elastischen Bereich, so daß die Wiederverwendbarkeit gegeben ist. Zwischen dem Schrauben- und dem Muttergewinde tritt eine Klemmung ein, die wesentliches Element der Sicherungseinrichtung ist. Dieses Reibmoment wirkt entgegengesetzt zum Losdrehmoment oder auch zum Anzugsdrehmoment und verhindert das selbsttätige Losdrehen der Schrauben/Muttern-Verbindung. Dieses Reibmoment vermindert allerdings die Ausnutzbarkeit der Schraube, da zu der Überwindung des Reibmoments beim Anziehen die Schraube zusätzlich beansprucht wird. Wenn jedoch das elastische Verhalten der Verbindung durch Gestaltung, Werkstoffauswahl, Oberflächenbehandlung usw. so ausgebildet wird, daß beim Auftreten der Vorspannkräfte durch elastische Verformung im Einschraubbereich die Steigungsdifferenz und damit das Reibmoment teilweise oder ganz abgebaut werden, dann wird durch diese Sicherungseinrichtung die Ausnutzbarkeit der Schraube nicht vermindert. Läßt die Vorspannkraft umgekehrt – beispielsweise durch eine Setzbewegung – nach, dann erscheint das Reibmoment der Sicherungseinrichtung wieder. Der beschriebene Effekt ist im übrigen anhand von Figur 5 theoretisch verdeutlicht. Es ist hier das Anzugsmoment $M_A$, das Lösemoment $M_L$ und die Spannkraft F über dem Drehwinkel prinzipiell aufgetragen. Beim Montieren eines Verbindungselements aus Schraube 1 und Mutter 2 wird sich zunächst die Mutter 2 relativ zur Schraube 1 ohne nennenswerte Kraftaufwendung aufschrauben lassen, wobei während dieser Aufschraubbewegung eine Anzahl n an reibfreien Umdrehungen zurückgelegt wird. Die maximale Einschraubtiefe ist noch nicht erreicht. Es folgt dann der Punkt, bei welchem das axiale Flankenspiel aufgezehrt ist, also an zwei Stellen des Verbindungselements eine flächige Anlage im Gewinde aneinander erfolgt. Jede weitere Anziehbewegung über den Drehwinkel ergibt ein Ansteigen des Anzugsmoments $M_A$, wie aus Figur 5 ersichtlich ist. Mit dem Aufsetzen des Kopfes der Schraube 1 bzw. der Mutter 2 auf dem Werkstück, welches durch das Verbindungselement zu halten ist, beginnt die Aufbringung der Spannkraft F. Im Momentenverlauf ist an dieser Stelle ein Sattel 5 erkennbar, also das Überschreiten eines Maximums des Anzugsmoments verbunden mit einem nachfolgenden Abfallen und Wiederansteigen des Moments. Dies ist die Stelle, in welcher sich beispielsweise gemäß Figur 3 die Schraube längt, also das der Sicherungseinrichtung zugeordnete Reibmoment ganz oder teilweise verschwindet. In diesem Bereich steigt natürlich das zur Erhöhung der Spannkraft F erforderliche weitere Anzugsmoment weiterhin an, so daß sich in der Summe dieser beiden Momente die beschriebene Sattelausbildung ergibt. Das Verbindungselement wird weiterhin im Anzugsdrehsinne montiert, bis die gewünschte Vorspannkraft F aufgebracht ist. Der maximale Drehwinkel ist erreicht und die Verbindung ist montiert.

Beim Lösen des Verbindungselements aus der montierten Stellung heraus verringert sich das Lösemoment $M_L$ und die Spannkraft F entsprechend. Erreicht die Spannkraft F den Wert Null, verbleibt ein Reibmoment 6, also das Reibmoment, welches allein der Sicherungseinrichtung zugeordnet ist. Auch in diesem Bereich ergibt sich also die typische Ausbildung eines Sattels 7.

Das Muttergewinde einerseits und das Schraubengewinde andererseits lassen sich bei der industriellen Fertigung nur innerhalb gewisser Toleranzen herstellen, so daß sich bei der Paarung der Elemente eine Streuung des Reibmoments bei festgelegter Mutternhöhe bzw. Einschraubtiefe ergibt. Die zufällige Lage der Flanken des Schraubengewindes relativ zum Muttergewinde innerhalb des Toleranzfelds hat somit einen Einfluß auf den Verlauf des Reibmoments der Sicherungseinrichtung. Zur Veranschaulichung soll der Einfluß am Beispiel eines Verbindungselements mit einer Mutter M 10 x 1,5 und einer Schraube M 10 x 1,47, Toleranzlage 4 H/ 4 h, Mutternlage bzw. Einschraubtiefe 16,5 mm dargestellt werden. Die Toleranzfelder für die Flankendurchmesser betragen:

Mutter $D_2$ = 9,026 bis 9,138 mm
Schraube $d_2$ = 8,941 bis 9,026 mm.

Die Paarungsvarianten bewegen sich zwischen folgenden Extremwerten:

Schraube Größtmaß - Mutter Kleinstmaß
Schraube Kleinstmaß - Mutter Größtmaß.

Aus dem Unterschied der Gewinde-Flankendurchmesser errechtnet sich das axiale Flankenspiel s gemäß Figur 6 wie folgt:

$$s = (D_2 - d_2) \cdot \tan 30°$$

für den Fall, daß die übliche Flankenausbildung mit einem Winkel von 60° gewählt wird.

Durch Einsetzen der Extremwerte ergeben sich für das axiale Flankenspiel s folgende Grenzwerte:

$$s_{min} = (9,026 - 9,026) \cdot \tan 30°$$
$$s_{max} = (9,138 - 8,941) \cdot \tan 30° = 0,11.$$

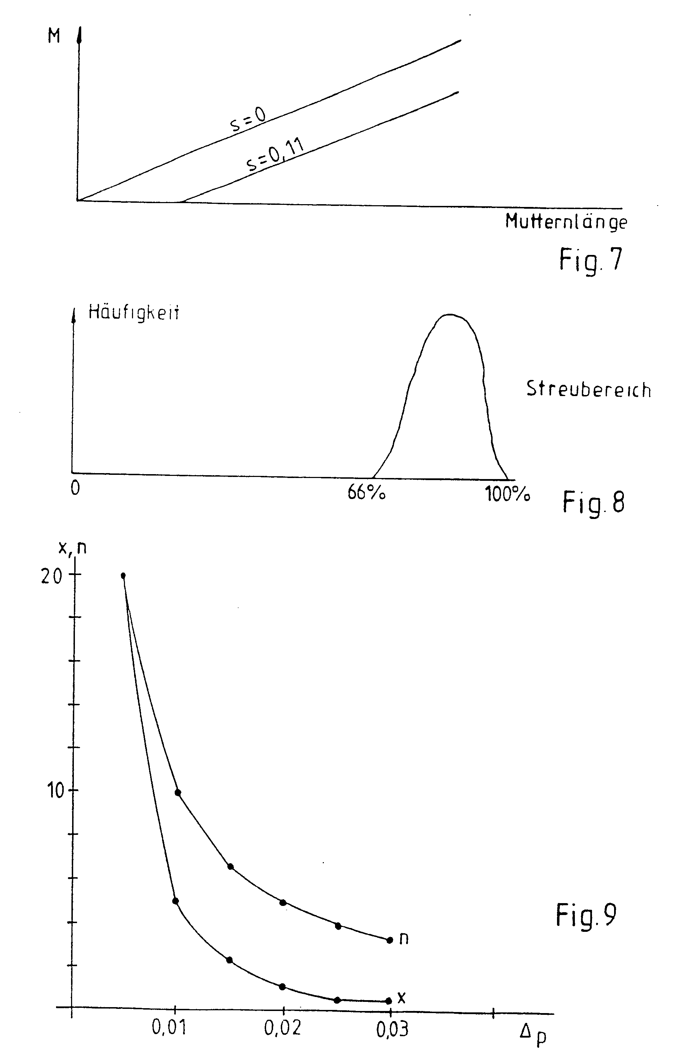

Im Falle s = 0 wird das Reibmoment unmittelbar nach dem Beginn des Verschraubungsvorgangs wirksam und steigt mit zunehmender Einschraubtiefe, also zum Erreichen der Mutternlänge von 16,5 mm an. Dies ist in Figur 7 dargestellt. Im Fall s = 0,11 muß zunächst das Flankenspiel durch Überwindung der Anzahl der reibfreien Umdrehungen n überwunden werden, ohne daß ein Reibmoment M auftritt. Hierzu sind also

$$n = \frac{s}{\delta P}$$

Gewindegänge erforderlich, im vorliegenden Fall also

$$n = \frac{0,11}{0,03} = 3,7.$$

Da die Mutter eine Steigung P von 1,5 aufweist, entspricht n = 3,7 einer Mutternlänge von 5,5 mm, so daß die nachfolgende, wirksame Mutternlänge 11 mm beträgt.

Setzt man lineare Verhältnisse als Annäherung voraus, dann werden die Reibmomente im Bereich 11 bis 16,5 mm bzw. im Feld zwischen 66 und 100 % streuen. Dieser Streubereich ist in Figur 8 dargestellt. Für die Auslegung eines Verbindungselements, welches durch ein solches Reibmoment M gesichert ist, kann demnach nur mit dem unteren Wert gerechnet werden. Je nach der Lage der Flankendurchmesser D und d von Mutter und Schraube im Toleranzfeld verschiebt sich auch der Übergangspunkt zwischen der Anzahl der reibfreien Umdrehungen und der Anzahl der zusätzlichen Umdrehungen bis zur maximalen elastischen Verformung. Die Abhängigkeit zwischen dem axialen Flankenspiel und der Anzahl der zu dessen Überwindung erforderlichen Zahl von Verdrehungen wurde rechnerisch und experimentell ermittelt und miteinander verglichen. Dabei ergaben sich folgende Werte:

| D | d | $(D_2-d_2) \cdot \tan 30°$ | $n = \dfrac{s}{\delta P}$ (gerechnet) | $n = \dfrac{s}{\delta P}$ (gemessen) | ø n |
|------|------|------|------|------|------|
| 9,09 | 8,86 | 0,133 | 4,4 | 5,0 | |
| 9,09 | 8,86 | 0,133 | 4,4 | 5,5 | |
| 9,09 | 8,86 | 0,133 | 4,4 | 5,0 | 5,0 |
| 9,09 | 8,86 | 0,133 | 4,4 | 4,5 | |
| 9,09 | 8,86 | 0,133 | 4,4 | 5,0 | |
| 9,09 | 8,92 | 0,098 | 3,3 | 3,5 | |
| 9,09 | 8,92 | 0,098 | 3,3 | 4,0 | |
| 9,09 | 8,92 | 0,098 | 3,3 | 3,5 | 3,8 |
| 9,09 | 8,92 | 0,098 | 3,3 | 4,0 | |
| 9,09 | 8,92 | 0,098 | 3,3 | 4,0 | |
| 9,09 | 8,95 | 0,081 | 2,7 | 3,0 | |
| 9,09 | 8,95 | 0,081 | 2,7 | 3,0 | |
| 9,09 | 8,95 | 0,081 | 2,7 | 3,5 | 3,2 |
| 9,09 | 8,95 | 0,081 | 2,7 | 3,0 | |
| 9,09 | 8,95 | 0,081 | 2,7 | 3,5 | |

Mit dem Index 2 sind einmal die jeweils gepaarten Schrauben- bzw. Muttern bezeichnet. Man erkennt, daß die gemessenen Werte für die Anzahl von Umdrehungen zur Erschöpfung des axialen Flankenspiels s im Durchschnitt um ca. 0,5 höher lagen als die theoretischen, errechneten Werte.

Nachfolgend sei zur weiteren Verdeutlichung der Zustand maximaler elastischer Verformung im Gewinde berechnet, und zwar ohne Einwirkung einer Axiallast und unter der Voraussetzung, daß sich die Mutter weitgehend starr verhält. Zur Erreichung einer optimalen Sicherungswirkung ist es wünschenswert, die Spannkraft des Verbindungselements dann aufzubringen, wenn bereits im Gewinde ein möglichst hohes Reibmoment entstanden ist. Damit eine Konstellation angesprochen, wie sie in Figur 2 dargestellt ist. Dies Reibmoment M soll dann verschwinden, wenn durch die Spannkraft eine Längung der Schraube und damit durch diese Spannkraft die vorher vorhanden gewesene Reibung im Bereich 4 der Mutter (Figur 3) entfällt. Die Mutternhöhe bzw. Einschraubtiefe setzt sich aus der Summe der Einschraublänge bei n reibfreien Umdrehungen und der maximalen elastischen Längenänderung $\delta l$ zusammen. Dabei ist

n = Anzahl der reibfreien Umdrehungen  
x = Anzahl der zusätzlichen Umdrehungen bis zur maximalen elastischen Verformung  
$\delta l$ = maximale elastische Längenänderung  
F = maximale Spannkraft  
A = Spannungsquerschnitt  
E = E-Modul  
s = axiales Flankenspiel  
P = Steigung  
$\delta P$ = Steigungsdifferenz  
l = Einschraublänge bei n-reibfreien Umdrehungen.

Wie ohne Weiteres überschau ist, gelten folgende Formeln:

$$n = \frac{s}{\delta P}$$

$$\frac{\delta l}{l} = \frac{F}{A \cdot E}$$

$$\delta l = \delta P \cdot x$$

$$l = n \cdot P$$

$$\frac{\delta P \cdot x}{n \cdot P} = \frac{F}{A \cdot E}$$

$$x = \frac{n \cdot P \cdot F}{\delta P \cdot A \cdot E} = \frac{s \cdot F \cdot P}{A \cdot E \cdot \delta P^2}$$

Aus den angegebenen Formeln für n und x lassen sich diese Anzahl der Umdrehungen für unterschiedliche Steigungsdifferenzen $\delta P$ anhand eines Beispiels berechnen. Es mögen folgende geometrischen Bedingungen gegeben sein:

Gewinde: M 10 x 1,5  
$F = 4 \cdot 10^4$ N  
s = 0,1 mm  
$A = 58$ mm$^2$  
$E = 20 \cdot 10^4$ N/mm$^2$  
P = 1,5 mm  

$$n = \frac{0,1}{\delta P}$$

und somit

| $\delta P$ | 0,005 | 0,010 | 0,015 | 0,020 | 0,025 | 0,030 |
|---|---|---|---|---|---|---|
| n | 20 | 10 | 6,7 | 5 | 4 | 3,3 |

7

Die Anzahl der zusätzlichem Umdrehungen ergibt sich

$$x = \frac{0,1 \cdot 4 \cdot 10^4 \cdot 1,5}{58 \cdot 20 \cdot 10^4 \cdot \delta P^2} = \frac{5 \cdot 10^4}{\delta P^2},$$

also

| $\delta P$ | 0,005 | 0,010 | 0,015 | 0,020 | 0,025 | 0,030 |
|---|---|---|---|---|---|---|
| x | 20 | 5 | 2,2 | 1,25 | 0,8 | 0,6 |

Diese Ergebnisse sind in Figur 9 dargestellt. Aus diesem Diagramm ist ein angenähert hyperbolischer Verlauf sowohl der Anzahl n der reibfreien Umdrehungen wie auch der Anzahl x der zusätzlichem Umdrehungen bis zur maximalen elastischen Verformung ersichtlich. In dem angegebenen Beispiel ist praktisch nur der Bereich der Steigungsdifferenz zwischen 1 bis 2 % sicherlich sinnvoll nutzbar, denn bei noch geringerer Steigungsdifferenz wächst die Mutternhöhe unvertretbar an, während umgekehrt bei einer größeren Steigungsdifferenz als 3 % die elastische Verformbarkeit bereits bei einem Bruchteil einer einzigen Umdrehung überschritten wird.

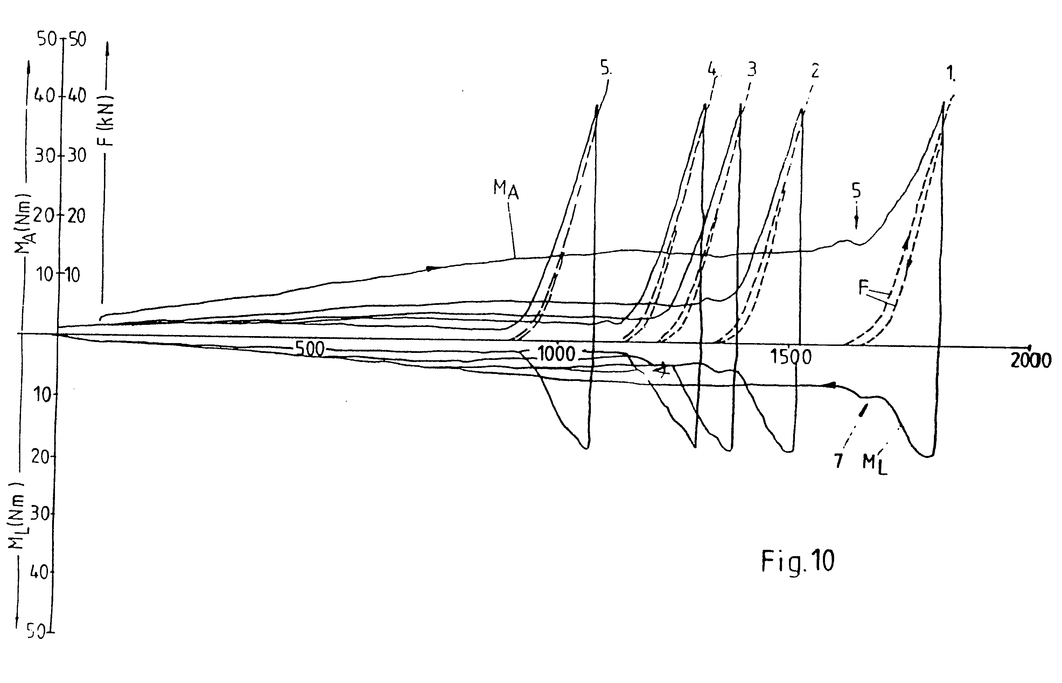

Die bisher wiedergegebenen theoretischen bzw. gerechneten Erkenntnisse wurden durch praktische Erprobung ergänzt. Zur Feststellung der Sicherungswirkung durch das Reibmoment M, bewirkt durch gezielte Steigungsdifferenz zwischen Schrauben- und Muttergewinde, wurden einige Versuchsreihen durchgeführt. Mit Muttern unterschiedlicher Mutterhöhe, also Einschraubtiefe, wurden jeweils 5 Anzugsversuche hintereinander durchgeführt, und zwar unter Aufbringung einer Spannkraft bis zu einem festgelegten Anzugsmoment. Figur 10 zeigt ein solches Versuchsdiagramm der 5 Anzugsversuche hintereinander, wobei die Momente bzw. die Vorspannkräfte über dem Drehwinkel wiedergegeben sind. Folgende Erkenntnisse konnten aus diesen Versuchen gewonnen werden:

Die Höhe der Mutter, also die Einschraubtiefe, spielt eine entscheidende Rolle für die Erzeugung eines reproduzierbaren Sicherungsmoments. Ist die Mutter zu kurz, tritt nach einem oder zwei Anzugsversuchen eine Glättung ein, die kein nennenswertes Sicherungsmoment nach Abfallen der Vorspannung mehr erbringt. Ist die Mutter zu lang, entsteht beim Verschrauben eine plastische Verformung, die nach kurzer Zeit zum Fressen führt. Eine Wiederverwendung ist damit weitgehend ausgeschlossen.

Im vorliegenden Fall (Figur 10) wurde mit einer Mutternlänge von 16,5 mm bei Gewinde M 10 und einer Steigung des Schraubengewindes von $P_S = 1,47$ ein gutes Ergebnis erzielt. Im Versuch wurde auch die Ausbildung der Sättel 5 und 7 der aufgrund theoretischer Überlegungen gezeichneten Figur 5 bestätigt. Bei einem Lösemoment von 28 Nm wurde nach Abbau der Spannkraft nach 5 Anzügen noch ein Restmoment von 5,5 Nm erreicht, welches als ausreichend für die Sicherungseinrichtung angesehen wird. Beim Verspannen des Verbindungselements ist nach Einsetzen der Spannkraft ein deutliches Absinken des Reibmoments M (Sattel 5) ersichtlich. Ebenso tritt beim Lösen der Verbindung nach Abbau der Spannkraft das Einsetzen des Reibmoments durch den Sattel 7 deutlich zutage.

Zur Absicherung der gewonnenen Erkenntnisse wurden Versuche auf einem Rüttelprüfstand durchgeführt. Einfach verspannte Schrauben zeigten auf diesem Rüttelprüfstand nach 1500 Lastwechseln keinen nennenswerten Abfall der Vorspannkraft. Diese Ergebnisse sind insofern zufriedenstellend, als die Sicherung gegen Losdrehen etwa vergleichbar ist zu aufwendigen Schrauben/Muttern-Verbindungen, die mit einer verzahnten Kopfauflagefläche arbeiten.

## Patentansprüche

1. Verbindungselement nach Art einer Schrauben/Muttern-Verbindung, mit einer ein Schraubengewinde aufweisenden Schraube und/oder mit einer ein Muttergewinde aufweisenden Mutter, wobei das Verbindungselement eine Sicherungseinrichtung aufweist, bei der das Schraubengewinde eine von der Steigung des Muttergewindes abweichende Steigung und das Schraubengewinde relativ zum Muttergewinde bzw. umgekehrt eine eine Klemmung verursachende Einschraubtiefe besitzt, derart, daß die Klemmung ein dem Losdrehmoment entgegenwirkendes Reibmoment bereitstellt, dadurch gekennzeichnet, daß der Unterschied der Steigung $\Delta P$ des Schraubengewindes relativ zum Muttergewinde etwa zwischen 1 und 2 % liegt, und daß dieser Unterschied $\Delta P$ und die Mutternhöhe bzw. Einschraubtiefe aufeinander auf eine Klemmung im elastischen Bereich abgestimmt sind, wobei sich die Mutternhöhe bzw. Einschraubtiefe aus der mit der Steigung P multiplizierten Summe von reibfreien Umdrehungen n und zusätzlichen Umdrehungen x bis zur ggf. maximalen elastischen Verformbarkeit nach den Formeln

$$n = \frac{s}{\Delta P}$$

$$x = \frac{s \cdot F \cdot P}{A \cdot E \cdot \Delta P^2}$$

zusammensetzt, wobei s das axiale Flankenspiel, F die maximale Spannkraft, A der Spannungsquerschnitt und E den Elastizitätsmodul bedeuten.

2. Verbindungselement nach Anspruch 1, dadurch gekennzeichnet, daß der Unterschied ΔP und die Mutternhöhe bzw. Einschraubtiefe so aufeinander abgestimmt sind, daß bei Auftreten der Vorspannkräfte durch elastische Verformung im Einschraubbereich die Steigungsdifferenz und damit das Reibmoment teilweise oder ganz abgebaut wird.

3. Verbindungselement nach Anspruch 1, dadurch gekennzeichnet, daß das Schraubengewinde eine kleinere Steigung als das Muttergewinde aufweist, und daß bei Zugbelastung der Verbindung die elastische Verformung im wesentlichen im Bereich der Schraube erfolgt.

4. Verbindungselement nach Anspruch 3, dadurch gekennzeichnet, daß bei Druckbelastung der Verbindung die elastische Verformung im wesentlichen im Bereich der Mutter erfolgt.

5. Verbindungselement nach Anspruch 2, dadurch gekennzeichnet, daß das Muttergewinde eine kleinere Steigung als das Schraubengewinde aufweist, und daß bei Druckbelastung der Verbindung die elastische Verformbarkeit im wesentlichen im Bereich der Schraube erfolgt.

6. Verbindungselement nach Anspruch 5, dadurch gekennzeichnet, daß bei Zugbelastung der Verbindung die elastische Verformung im wesentlichen im Bereich der Mutter erfolgt.

7. Verbindungselement nach Anspruch 4 oder 6, dadurch gekennzeichnet, daß zur Realisierung einer Einstellschraube die Mutter weitgehend starr ausgebildet ist.

## Claims

1. Connecting element like a screw/nut connection, comprising a screw having a screw thread and/or a nut having a nut thread, the connecting element having a securing means in which the screw thread has a pitch differing from the pitch of the nut thread, and the screw thread, relative to the nut thread, or vice versa, has a screw-in depth causing locking such that the locking provides a friction torque counteracting the unscrewing torque, characterized in that the difference in the pitch ΔP of the screw thread relative to the nut thread is approximately between 1 and 2 %, and in that this difference Δ and the nut height or screw-in depth are adapted to one another for locking in the elastic range, the nut height or screw-in depth being composed of the sum, multiplied by the pitch P, of frictionless turns n and additional turns x up to any maximum elastic deformability according to the formulae

$$n = \frac{s}{\Delta P}$$

$$x = \frac{s \cdot F \cdot P}{A \cdot E \cdot \Delta P^2}$$

where s denotes the axial flank clearance, F the maximum clamping force, A the cross-section of stress and E the modulus of elasticity.

2. Connecting element according to Claim 1, characterized in that the difference ΔP and the nut height or screw-in depth are adapted to one another in such a way that, when the prestressing forces appear, the difference in pitch and thus the friction torque are partly or completely removed by elastic deformation in the screw-in area.

3. Connecting element according to Claim 1, characterized in that the screw thread has a smaller pitch than the nut thread, and in that, when the connection is subjected to tensile load, the elastic deformation takes place essentially in the area of the screw.

4. Connecting element according to Claim 3, characterized in that, when the connection is subjected to compressive load, the elastic deformation takes place essentially in the area of the nut.

5. Connecting element according to Claim 2, characterized in that the nut thread has a smaller pitch than the screw thread, and in that, when the connection is subjected to compressive load, the elastic deformation takes place essentially in the area of the screw.

6. Connecting element according to Claim 5, characterized in that, when the connection is subjected to tensile load, the elastic deformation takes place essentially in the area of the nut.

7. Connecting element according to Claim 4 or 6, characterized in that, to realize an adjusting screw, the nut is designed to be largely rigid.

## Revendications

1. Elément d'assemblage du genre d'un assemblage à vis et écrou, avec une vis présentant un filetage de vis et/ou un écrou présentant un filetage taraudé, dans lequel l'élément d'assemblage présente un agencement d'arrêt dans lequel le filetage de la vis possède un pas différent du pas de taraudage de l'écrou, tandis que le filetage de la vis possède, par rapport au filetage de l'écrou, ou vice-versa, une profondeur de vissage provoquant un coincement, de telle sorte que le coincement engendre un couple de frottement s'opposant au couple de desserrage, *caractérisé* en ce que la différence de pas ΔP du filetage de la vis par rapport au pas de filetage de l'écrou se situe approximativement entre 1 % et 2 %, et en ce que cette différence de pas et la hauteur de l'écrou ou la profondeur de vissage se composent de la somme, multipliée par le pas P, du nombre de tours *n* sans frottement et du nombre de tours supplémentaires *x* jusqu'à la déformabilité élastique maximale éventuelle, selon les formules:

$$n = \frac{s}{\Delta P}$$

$$x = \frac{s \cdot F \cdot P}{A \cdot E \cdot \Delta P^2}$$

dans lesquelles s représente le jeu axial entre les flancs, F la force maximale de serrage, A la section de serrage et E le module d'élasticité.

2. Elément d'assemblage selon la revendication 1, *caractérisé* en ce que la différence ΔP et la hauteur de l'écrou ou la profondeur de vissage sont déterminées, l'une par rapport à l'autre, de telle manière que, lors de l'apparition des forces de précontrainte par déformation élastique dans la zone de vissage, la différence de pas, et par suite le couple de frottement, deviennent partiellement ou totalement supprimés.

3. Elément d'assemblage selon la revendication 1, *caractérisé* en ce que le filetage de la vis présente un pas plus petit que celui du filetage de l'écrou, et en ce que, lorsque l'assemblage est soumis à une contrainte de traction, la déformation élastique a lieu essentiellement dans la région de la vis.

4. Elément d'assemblage selon la revendication 3, *caractérisé* en ce que, lorsque l'assemblage est soumis à une contrainte de compression, la déformation élastique a lieu essentiellement dans la région de l'écrou.

5. Elément d'assemblage selon la revendication 2, *caractérisé* en ce que le filetage de l'écrou présente un pas plus petit que celui du filetage de la vis, et en ce que, lorsque l'élément d'assemblage est soumis à une contrainte de compression, la déformation élastique a lieu essentiellement dans la région de la vis.

6. Elément d'assemblage selon la revendication 5, *caractérisé* en ce que, lorsque l'assemblage est soumis à une contrainte de traction, la déformation élastique a lieu essentiellement dans la région de l'écrou.

7. Elément d'assemblage selon la revendication 4 ou 6, *caractérisé* en ce que, pour la réalisation d'une vis de réglage, l'écrou est, dans une grande mesure, formé de manière rigide.

EP 0 237 716 B1

Fig. 1

$P_S < P_M$
unbelastet
Reibmoment

Fig. 2

$P_S < P_M$
zugbelastet
Reibmoment
verschwunden

Fig. 3

Fig. 4

$M_A$ = Anzugsmoment

$M_L$ = Lösemoment

F = Spannkraft

$\star$ = Drehwinkel

Fig. 5

Fig. 6

Fig. 7

Fig. 8

Fig. 9

Fig.10

EP 0 237 716 B1